Europäisches Patentamt

European Patent Office

Office européen des brevets

(11) Veröffentlichungsnummer: **0 324 073 B1**

(12) **EUROPÄISCHE PATENTSCHRIFT**

(45) Veröffentlichungstag der Patentschrift: **07.10.92**

(21) Anmeldenummer: **88118462.6**

(22) Anmeldetag: **05.11.88**

Die Akte enthält technische Angaben, die nach dem Eingang der Anmeldung eingereicht wurden und die nicht in dieser Patentschrift enthalten sind.

(51) Int. Cl.⁵: **C08G 69/42**, C08G 69/26

(54) **Formmassen bestehend aus aliphatisch/aromatischen Copolyamiden.**

(30) Priorität: **08.01.88 DE 3800293**

(43) Veröffentlichungstag der Anmeldung:
**19.07.89 Patentblatt 89/29**

(45) Bekanntmachung des Hinweises auf die Patenterteilung:
**07.10.92 Patentblatt 92/41**

(84) Benannte Vertragsstaaten:
**BE CH DE FR GB IT LI NL**

(56) Entgegenhaltungen:
**EP-A- 0 237 722**
**DE-A- 3 539 846**

**JOURNAL OF POLYMER SCIENCE, Band 12, 1974, Seiten 575-587, John Wiley & Sons, Inc.; G.L. BRODE et al.: "High temperature polymers. II. High temperature polymers from 4,4'-[sulfonylbis-(p-phenyleneoxy)]dianiline"**

(73) Patentinhaber: **HÜLS AKTIENGESELLSCHAFT Patentabteilung / PB 15 - Postfach 13 20 W-4370 Marl 1(DE)**

(72) Erfinder: **Finke, Jürgen, Dr.
Am Alten Sportplatz 17 a
W-4370 Marl(DE)**
Erfinder: **Neugebauer, Wolfgang, Dr.
Karl-Leisner-Strasse 4
W-4480 Dülmen-Merfeld(DE)**
Erfinder: **Koziel, Holger, Dr.
Im Kuniberg 76
W-4350 Recklinghausen(DE)**
Erfinder: **Bartmann, Martin Dr.
Burgstrasse 35
W-4350 Recklinghausen(DE)**

**Beschreibung**

Gegenstand der Erfindung sind Formmassen bestehend aus aliphatisch/aromatischen Copolyamiden.

Aus DE-OS 36 09 011 sind aromatische Polyamide bekannt, die 4,4'-Bis(4-aminophenoxi)-diphenylsulfon enthalten. In DE-OS 35 39 846 werden gleichfalls derartige aromatische Polyamide beschrieben, wobei sie bis zu 40 % aliphatische Polyamid-Anteile enthalten können.

Aufgabe der Erfindung war es, thermoplastisch verarbeitbare Polyamide mit hoher mechanischer Festigkeit, hoher Wärmeformbeständigkeit und guter Chemikalienbeständigkeit zur Verfügung zu stellen.

Diese Aufgabe wurde gelöst durch Formmassen bestehend aus Copolyamiden, die durch Polykondensation von $\alpha,\omega$-Dicarbonsäuren mit $\alpha,\omega$-Diaminen und/oder von $\alpha,\omega$-Aminocarbonsäuren bzw. deren Lactamen gebildet werden, wobei als $\alpha,\omega$-Diamine zumindest teilweise die aromatischen Diamine ausgewählt aus der Gruppe 4,4'-Bis(4-aminophenoxi)diphenylsulfon, 4,4'-Bis(3-aminophenoxi)diphenylsulfon, 4,4'-Bis(4-aminophenoxi)-benzophenon, 4,4'-Bis(3-aminophenoxi)-benzophenon oder deren Gemische enthalten sind, und die aliphatisch/aromatischen Copolyamide zwischen den Amidgruppen statistisch verteilt

A. > 40 bis < 100 Mol-% aliphatische Reste und

B. < 60 Mol-% aromatische Reste aufweisen.

Bevorzugt sind solche Formmassen, deren Copolyamide > 60 Mol-%, insbesondere 80 bis 95 Mol-%, aliphatische Reste enthalten, wobei der Anteil zu 100 Mol-% von aromatischen Resten gebildet wird. (Unter dem Begriff "Rest" wird derjenige Molekülbestandteil des jeweils eingesetzten Monomeren verstanden, der nach der Polykondensationsreaktion in das Polykondensat eingebaut ist.) Die erfindungsgemäßen Polyamide werden durch Polykondensation von alpha,omega-Dicarbonsäuren mit alpha,omega-Diaminen und/oder von alpha,omega-Aminocarbonsäuren bzw. deren Lactamen nach bekannten Methoden gebildet.

Als aliphatische Dicarbonsäuren können solche mit 4 bis 20 C-Atomen in der Kohlenstoffkette, wie z. B. Bernsteinsäure, Glutarsäure, Adipinsäure, Suberinsäure, Pimelinsäure oder Sebacinsäure eingesetzt werden. Gleichfalls können die entsprechenden Anhydride oder andere funktionelle Derivate verwendet werden.

Als aromatische Dicarbonsäuren kommen in Frage:

I. Isophthalsäure, Terephthalsäure, wobei beide Säuren ein- oder mehrfach durch nachstehende Reste im Kern substituiert sein können:

a) $C_{1-6}$-Alkyl

b) ($C_{1-6}$-alkyl- oder -arylsubstituierte) Phenylreste

c) Alkoxyreste mit 1 - 6 C-Atomen

d) Phenoxyreste, wobei der Phenylring $C_{1-6}$-alkyl- oder -arylsubstituiert sein kann

e) Halogene, insbesondere Chlor und Brom;

II. Dicarbonsäuren der allgemeinen Formel

HOOC - Ar - O - Ar - SO$_2$ - Ar - O - Ar - COOH

mit

Ar = m-Phenylen oder p-Phenylen;

wie z. B. 4,4'-Bis(4-carboxiphenoxi)-diphenylsulfon, 4,4'-Bis(3-carboxiphenoxi)-diphenylsulfon;

III. Dicarbonsäuren der allgemeinen Formel

HOOC - Ar - (A)$_q$ - Ar - COOH

mit

Ar = m-Phenylen oder p-Phenylen;

A = -O-, -S-, -SO$_2$-, -CO-;

q = 0 oder 1;

wie z. B. 4,4'-Diphenyletherdicarbonsäure, 4,4'-Diphenylsulfondicarbonsäure, 4,4'-Benzophenondicarbonsäure, 4,4'-Biphenyldicarbonsäure.

Als aliphatische Diamine können solche mit 4 bis 20 C-Atomen in der Kohlenstoffkette, wie z. B. Tetramethylendiamin, Hexamethylendiamin, Trimethylhexamethylendiamin, Oktamethylendiamin, Isophorondiamin, Decamethylendiamin, Dodecamethylendiamin, 4,4'-Diaminodicyclohexylmethan oder 4,4'-Diamino-3,3'-dimethyldicyclohexylmethan eingesetzt werden.

Als aromatische Diamine werden nachstehende Verbindungen 4,4'-Bis(4-aminophenoxi)-diphenylsulfon, 4,4'-Bis(3-aminophenoxi)-diphenylsulfon, 4,4'-Bis(4-aminophenoxi)-benzophenon, 4,4'-Bis(3-amino phenoxi)-benzophenon oder deren Gemische eingesetzt.

Bis zu 20 Mol-% dieser genannten aromatischen Diamine können durch Diamine nachstehender allgemeiner Formel ersetzt werden:

H$_2$N - Ar ((Z)$_q$ - Ar)$_r$ - NH$_2$

mit

Ar = m- oder p-Phenylen;

Z = gleiche oder verschiedene Reste aus der Gruppe -O-, -S-, -SO$_2$-, -CO-, -C-(CH$_3$)-;

q = 0 oder 1;

r = 0, 1 oder 2.

Insbesondere kommen hierfür z. B. m- oder p-Phenylendiamin; 4,4'-Diaminodiphenylether; 4,4'-Diaminodiphenylsulfon; 4,4'-Diaminobenzophenon in Frage.

Die genannten aliphatischen Dicarbonsäuren und Diamine können ganz oder teilweise auch durch aliphatische alpha,omega-Aminocarbonsäuren oder deren Lactame mit 4 bis 20 C-Atomen ersetzt werden, wie z. B. Aminoundecansäure, Aminododecansäure, Caprolactam oder Laurinlactam, bevorzugt Caprolactam und Laurinlactam.

Bezogen auf 1 Mol Amino-Gruppe werden 0,95 bis 1,05 Mol, vorzugsweise 1 Mol, Carboxyl-Gruppen eingesetzt.

Die Herstellung kann in einfacher Weise nach bekannten Methoden (z. B. DE-OS 35 39 846, DE-OS 36 09 011) erfolgen. Hierzu werden die Ausgangsstoffe - in Abwesenheit von Sauerstoff, vorzugsweise in einer Inertgas-atmosphäre - bei Temperaturen im Bereich von 180 bis 350 ° C, vorzugsweise von 200 bis 300 ° C, aufgeschmolzen. Unter Entfernen von Wasser findet die Polykondensation statt. Es ist prinzipiell unerheblich, ob die Reaktion bei Normaldruck oder Überdruck bzw. unter Vakuum erfolgt.

Die Polykondensation kann in Lösung oder in der Schmelze durchgeführt werden.

Es ist nicht erforderlich, Katalysatoren einzusetzen, es ist jedoch möglich. Katalysatoren werden z. B. in DE-OS 35 39 846, DE-OS 36 09 011 beschrieben.

Sollte das Endprodukt kein ausreichend hohes Molekulargewicht aufweisen, kann eine Nachkondensation in der Schmelze oder in fester Phase angeschlossen werden.

In der Wahl der Ausgangsstoffe zu Beginn der Polykondensation ist der Fachmann frei. So ist es möglich, alle aromatischen und aliphatischen Komponenten als Monomerengemisch einzusetzen. Gleichfalls ist es möglich, in getrennten Arbeitsgängen zuerst jeweils ein oligomeres/polymeres aromatisches Amid bzw. das entsprechende aliphatische Amid zu polykondensieren und dann erst das endgültige Polyamid aus dem Gemisch beider Ausgangsoligo(poly)mere herzustellen.

Die erfindungsgemäßen Polyamide weisen eine Viskosität im Bereich von $eta_{rel}$ = 1,10 bis 2,30, vorzugsweise von 1,50 bis 2,25, auf.

Die Glastemperaturen ($T_g$) der erfindungsgemäßen Polyamide liegen im Bereich von 100 bis 220 ° C, bevorzugt von 150 bis 200 ° C.

Falls erwünscht, können noch Hilfs- und Zusatzstoffe wie Stabilisatoren, Füllstoffe wie Talkum, oder Verstärkungsmittel wie Glas-, ARAMID[R]- oder Kohlefasern sowie andere übliche Zusätze wie Pigmente, Verarbeitungshilfsmittel, Entformungsmittel oder Stabilisatoren zugesetzt werden.

Die so erhaltenen Formmassen werden unter Anwendung bekannter Verfahren wie z. B. Extrudieren oder im Spritzguß zu Formteilen verarbeitet.

Die erfindungsgemäßen Polyamide weisen höhere Glastemperaturen auf als allgemein bekannte, vergleichbare aliphatische Polyamide und zeigen damit bereits ohne Verstärkungsmittel eine höhere Wärmeformbeständigkeit. Unerwartet ist ihre hohe mechanische Festigkeit auf vergleichbarem Niveau wie das der vollaromatischen Polyamide bei gleichzeitig erheblich verbesserter Schlagzähigkeit gegenüber den aromatischen Polyamiden allein. Weiter ist es überraschend, daß bereits geringe aromatische Amidanteile die Chemikalienbeständigkeit deutlich verbessern.

Die in der Beschreibung und in den Beispielen genannten Parameter wurden mit Hilfe nachstehender Verfahren bestimmt.

Die DSC-Untersuchungen zur Ermittlung der Glastemperatur ($T_g$) und des Schmelzpunktes ($T_m$) wurden an einem Perkin-Elmer-Calorimeter DSC-1B bei einer Aufheizgeschwindigkeit von 16 K/min durchgeführt.

Die relative Viskosität ($eta_{rel}$) wurde mit einem Ubbelohde-Viskosimeter bei 25 ° C in m-Kresol gemessen (Konzentration: 0,5 Gew.-% Polyamid).

Beispiele

Beispiel 1

Einsatzstoffe:     13,864 g (0,08345 Mol) Terephthalsäure (TS)

2,774 g (0,01670 Mol) Isophthalsäure (IS)

14,361 g (0,08334 Mol) 1,10-Diaminodecan

7,210 g (0,01667 Mol) 4,4'-Bis-(4-aminophenoxi)-diphenylsulfon (BAPS)

43 $\mu$l 50 %ige, wäßrige $H_3PO_2$

49 mg Dimethylaminopyridin (DMAP)

Die Einsatzstoffe werden in einem Polykondensationsrohr mit Rührer, Stickstoffeinleitung und Destillationsbrücke gemischt und unter Stickstoff bei Normaldruck 15 min bei 250 ° C, 15 min bei 280 ° C und 20 min bei 300 ° C gerührt, worauf die Polykondensation weitere 15 min bei 300 ° C unter Anlegen eines Vakuums von 2,5 mbar durchgeführt wird. Das Polyamid zeigt einen $T_g$-Wert von 138 ° C, einen $T_m$-Wert von 281 ° C und einen $eta_{rel}$-Wert von 1,92.

Beispiel 2

Einsatzstoffe:     16,613 g (0,10 Mol) TS

13,455 g (0,085 Mol) Trimethylhexamethylendiamin

6,487 g (0,015 Mol) BAPS

43 $\mu$l 50 %ige, wäßrige $H_3PO_2$

49 mg DMAP

Die Reaktion wird entsprechend Beispiel 1 durchgeführt. Das Polymere zeigt einen $T_g$-Wert von 165 °C und einen $eta_{rel}$-Wert von 1,78.

Beispiel 3

Einsatzstoffe: 23,05 g (0,100 Mol) Dodecandicarbonsäure
43,25 g (0,100 Mol) BAPS
43 $\mu$l 50 %ige, wäßrige $H_3PO_4$
49 mg DMAP

Die Reaktion wird entsprechend Beispiel 1 durchgeführt, jedoch mit dem Unterschied, daß die Reaktionszeit bei 300 °C unter Vakuum verdoppelt wird. Das Polymere zeigt einen $T_g$-Wert von 180 °C und einen $eta_{rel}$-Wert von 1,74.

Beispiel 4

Einsatzstoffe: 21,62 g (0,05 Mol) BAPS
19,94 g (0,12 Mol) IS
15,00 g (0,075 Mol) Aminoundecansäure
11,01 g (0,07 Mol) Trimethylhexamethylendiamin
82,00 mg Phosphorige Säure
22,00 mg DMAP

Die Einsatzstoffe werden im Polykondensationsrohr mit Rührer, Stickstoffeinleitung und Destillationsbrücke gemischt und unter Stickstoff bei Normaldruck 5 h bei 280 °C gerührt. $eta_{rel}$ = 1,37.

Beispiel 5

Es werden 28,61 Gew.-Teile (0,14 Mol) Laurinlactam und 22,43 Gew.-Teile (0,14 Mol) Isophthalsäure in einen Glasreaktor eingewogen und durch mehrmaliges Spülen mit Stickstoff von Luftsauerstoff befreit. Der Reaktor wird in einem Metallbad auf eine Temperatur von 250 °C gebracht. Unter Rühren und Überleiten eines Stickstoffstroms erfolgt die Lactamspaltung in 2 Stunden. Nach Abkühlen auf ca. 230 °C werden 15,14 Gew.-Teile (0,04 Mol) Bis(4-aminophenoxi)diphenylsulfon und 14,30 Gew.-Teile (0,10 Mol) m-Xylylendiamin in den Reaktor gegeben. Weiterhin wird ein Katalysator aus Hypophosphoriger Säure und Dimethylaminopyridin in einer Menge von 0,5 Gew.-% bezogen auf die gesamte Monomereinwaage zugefügt. Unter stetiger Temperaturerhöhung läßt man das Gemisch unter Abdestillieren des Reaktionswassers polykondensieren. Nach 4 Stunden und einer Endtemperatur von 280 °C entsteht ein transparentes Copolyamid mit einem $eta_{rel}$-Wert von 1,71 und einem $T_g$-Wert von 125 °C.

Beispiel 6

Entsprechend den Bedingungen von Beispiel 5 werden 28,61 Gew.-Teile (0,14 Mol) Laurinlactam, 22,43 Gew.-Teile (0,14 Mol) Isophthalsäure, 15,14 Gew.-Teile (0,04 Mol) Bis(4-aminophenoxi)diphenylsulfon und 22,09 Gew.-Teile (0,10 Mol) Bis(4-aminocyclohexyl)methan umgesetzt. Das Produkt besitzt einen $eta_{rel}$-Wert von 1,65, der $T_g$-Wert beträgt 155 °C.

Beispiel 7

Gemäß Beispiel 5 werden 23,00 Gew.-Teile (0,12 Mol) Laurinlactam mit 24,95 Gew.-Teilen (0,15 Mol) Isophthalsäure, 7,56 Gew.-Teilen (0,01 Mol) Bis(4-aminophenoxi)diphenylsulfon und 28,64 Gew.-Teilen (0,14 Mol) Bis(4-aminocyclohexyl)methan unter Verwendung von 0,5 Gew.-% eines Katalysatorsystems aus gleichen Gew.-Teilen Hypophosphoriger Säure und Dimethylaminopyridin umgesetzt. Das transparente Produkt weist einen $eta_{rel}$-Wert von 1,69 und einen $T_g$-Wert von 165 °C auf.

Beispiel 8

Entsprechend Beispiel 5 entsteht aus 28,77 Gew.-Teilen (0,15 Mol) Laurinlactam, 22,50 Gew.-Teilen (0,14 Mol) eines Gemisches aus Isophthalsäure und Terephthalsäure im Gew.-Verhältnis 95 : 5, 7,56 Gew.-Teilen (0,02 Mol) Bis(4-aminophenoxi)diphenylsulfon und 25,54 Gew.-Teilen (0,12 Mol) Bis(4-aminocyclohexyl)methan ein Copolyamid, das völlig transparent ist; $eta_{rel}$: 1,52, $T_g$: 150 °C.

Beispiel 9

Wie in Beispiel 5 aufgeführt, werden 29,60 Gew.-Teile (0,15 Mol) Laurinlactam, 12,46 Gew.-Teile (0,08 Mol) Isophthalsäure und 32,44 Gew.-Teile (0,08 Mol) Bis(4-aminophenoxi)diphenylsulfon unter Zusatz von 0,5 Gew.-% des Katalysatorsystems aus gleichen Gew.-Teilen Hypophosphoriger Säure und Dimethylaminopyridin polykondensiert. Es resultiert ein Copolyamid, das vollkommen transparent ist und einen $eta_{rel}$-Wert von 1,45 sowie einen $T_g$-Wert von 135 °C besitzt.

Beispiel 10

Einsatzstoffe: 8,31 g (0,05 Mol) IS
21,62 g (0,05 Mol) BAPS
30,00 g (0,15 Mol) Laurinlactam (LL)
54,00 $\mu$l 50 %ige, wäßrige $H_3PO_2$
61,00 mg DMAP

Die Reaktion wird analog Beispiel 4 durchgeführt. Das Polyamid zeigt einen $T_g$-Wert von 110 °C und einen $eta_{rel}$-Wert von 1,97.

## Beispiel 11

Einsatzstoffe:
8,31 g (0,05 Mol) TS
21,62 g (0,05 Mol) BAPS
30,00 g (0,15 Mol) LL
54,00 $\mu$l 50 %ige, wäßrige $H_3PO_2$
61,00 mg DMAP

Entsprechend Beispiel 4 werden die Einsatzstoffe 3 h bei 280 °C und 2 h bei 300 °C polykondensiert.

$T_g$: 180 °C, eta$_{rel}$: 1,53.

## Beispiel 12

Einsatzstoffe:
8,31 g (0,05 Mol) IS
21,62 g (0,05 Mol) BAPS
25,00 g (0,13 Mol) Aminododecansäure
218,00 $\mu$l 50 %ige, wäßrige $H_3PO_2$
244,00 mg DMAP

Die Polykondensation erfolgt entsprechend Beispiel 11.

Das Produkt zeigt einen $T_g$-Wert von 110 °C und einen eta$_{rel}$-Wert von 1,57.

## Patentansprüche

1. Formmasse bestehend aus aliphatisch/aromatischen Copolyamiden, die durch Polykondensation von $\alpha,\omega$-Dicarbonsäuren mit $\alpha,\omega$-Diaminen und/oder von $\alpha,\omega$-Aminocarbonsäuren bzw. deren Lactamen gebildet werden, wobei als $\alpha,\omega$-Diamine zumindest teilweise die aromatischen Diamine ausgewählt aus der Gruppe 4,4'-Bis(4-amino phenoxi)-diphenylsulfon, 4,4'-Bis(3-aminophenoxi)-diphenylsulfon, 4,4'-Bis(4-aminophenoxi)-benzophenon, 4,4'-Bis(3-aminophenoxi)-benzophenon oder deren Gemische enthalten sind, und die aliphatisch/aromatischen Copolyamide zwischen den Amidgruppen statistisch verteilt
A. > 40 bis < 100 Mol-% aliphatische Reste und
B. < 60 Mol-% aromatische Reste
aufweisen, wobei als Reste jeweils die Struktureinheiten der Ausgangskomponenten zu verstehen sind.

2. Formmasse gemäß Anspruch 1, die > 60 Mol-% aliphatische Reste enthält.

3. Formmasse gemäß Anspruch 1, die 80 bis 95 Mol-% aliphatische Reste enthält.

4. Formmasse gemäß Anspruch 1 bis 3, die in der Komponente B. als aromatisches Diamin 4,4'-Bis(4-aminophenoxi)diphenylsulfon enthält.

## Claims

1. A moulding composition composed of aliphatic/aromatic copolyamides which are formed by polycondensation of $\alpha,\omega$-dicarboxylic acids with $\alpha,\omega$-diamines and/or of $\alpha,\omega$-aminocarboxylic acids or lactams thereof, aromatic diamines selected from the group consisting of 4,4'-bis(4-aminophenoxy)diphenyl sulphone, 4,4'-bis(3-aminophenoxy)diphenyl sulphone, 4,4'-bis(4-amino-phenoxy)-benzophenone, 4,4'-bis(3-aminophenoxy)-benzophenone and mixtures thereof being present as at least a portion of the $\alpha,\omega$-diamines, and the aliphatic/aromatic copolyamides containing
A. > 40 to < 100 mol % of aliphatic radicals and
B. < 60 mol % of aromatic radicals
randomly distributed between the amide groups, radicals in each case being understood as meaning the structural units of the starting components.

2. A moulding composition according to claim 1, which contains > 60 mol % of aliphatic radicals.

3. A moulding composition according to claim 1, which contains 80 to 95 mol % of aliphatic radicals.

4. A moulding composition according to any of claims 1 to 3, which contains 4,4'-bis(4-aminophenoxy)diphenyl sulphone as aromatic diamine in the component B.

## Revendications

1. Masse à mouier à base de copolyamides aliphatico-aromatiques qui sont formées par polycondensation d'acides alpha,omêga-dicarboxyliques avec des alpha,omêga-diamines et/ou d'acides alpha,omêga-amino-carboxyliques ou de leurs lactames, tandis que comme alpha,omêga-diamines sont contenues au moins en partie les diamines aromatiques choisis dans le groupe
de la 4,4'-bis-(4-amino-phénoxy)-diphényl-sulfone,
de la 4,4'-bis-(3-amino-phénoxy)-diphényl-sulfone,
de la 4,4'-bis-(4-amino-phénoxy)-benzophénone,
de la 4,4'-bis-(3-amino-phénoxy)-benzophénone ou leurs mélanges, et que les copolyamides aliphatico-aromatiques présentent, statistiquement répartis entre les groupes amide,

A. plus de 40 à moins de 100 mol-% de restes aliphatiques

et

B. moins de 60 mol.-% de restes aromatiques, tandis qu'il y a lieu d'entendre, comme restes, chaque fois les unités structurales des composants de départ.

2. Masse à mouler selon la revendication 1, renfermant plus de 60 mol.-% de restes aliphatiques.

3. Masse à mouler selon la revendication 1, renfermant de 80 à 95 Mol.-% de restes aliphatiques.

4. Masse à mouler selon les revendications 1 à 3, renfermant dans le composant B, en tant que diamine aromatique, de la 4,4'-bis-(4-amino-phénoxy)-diphényl-sulfone.